# EUROPÄISCHE PATENTANMELDUNG

(11) **EP 1 333 610 A2**
(43) Veröffentlichungstag der Anmeldung: **06.08.2003**
(21) Anmeldenummer: 03000410.5
(22) Anmeldetag: 10.01.2003
(51) Int. Cl.: H04L 7/02

(54) **Taktregelungsschaltung zur Taktphasenregelung eines Transceivers**

(30) Priorität: 01.02.2002 DE 10204190
(71) Anmelder: Infineon Technologies AG, 81669 München (DE)
(72) Erfinder: Schenk, Heinrich, 81476 München (DE)
(74) Vertreter: Reinhard - Skuhra - Weise & Partner GbR

(57) **Zusammenfassung**

Es wird ein Taktphasenregelungsschaltung zur Taktphasenregelung eines Transceivers geschaffen mit
einer Abtastschaltung (16) zum Abtasten eines analogen Empfangssignals mit einem Abtasttaktsignal;
einer Echosignalkompensationsschaltung (7) zur Kompensation eines Echosignals, das durch ein von dem Transceiver (1) gesendetes Sendesignal hervorgerufen wird,
wobei die Echosignalkompensationsschaltung (7) in Abhängigkeit von einem Einstellsignal adaptiv einstellbar ist;
einer Steuerschaltung (41) zur Erzeugung eines Steuersignales zur Taktphasenregelung, das die Phasenabweichung zwischen der Signalphase des Abtasttaktsignals und einer Soll-Signalphase eines idealen Abtasttaktsignals angibt;
einem Schleifenfilter (47) zum Filtern des Steuersignals; einem Phasenzähler (51) zur Erzeugung des Abtasttaktsignal in Abhängigkeit von dem gefilterten Steuersignal beschrieben. Zwischen dem Schleifenfilter (47) und dem Phasenzähler (51) ist eine Amplitudenbegrenzungsschaltung (49) vorgesehen, die die Amplitude des gefilterten Steuersignals auf einen Begrenzungswert begrenzt,
wobei der Begrenzungswert von dem Einstellsignal für die Echosignalkompensationsschaltung (7) abhängt.

## Beschreibung

Die Erfindung betrifft eine Taktphasenregelungsschaltung zur Taktphasenregelung eines Transceivers nach dem Oberbegriff des Patentanspruchs 1.

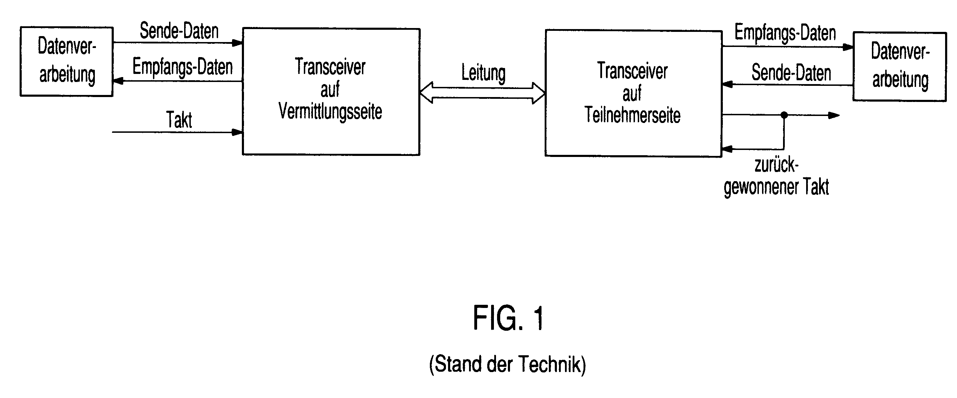

Die Fig. 1 zeigt ein Datenübertragungssystem nach dem Stand der Technik. Ein Transceiver bzw.eine Sende- und Empfangsschaltung empfängt von einer Datenquelle Sendedaten und sendet diese als analoges Sendesignal über eine Datenübertragungsleitung zu einem anderen Transceiver. Bei der Datenübertragungsleitung handelt es sich beispielsweise um eine Zwei-Draht-Telefonleitung aus Kupfer. Der Transceiver auf der Vermittlungsseite COT (central office terminal) stellt dabei den Taktmaster dar, d.h. das gesendete Sendesignal wird synchron mit einem Taktsignal des Transceivers auf der Vermittlungsseite ausgesendet. Der Transceiver auf der Teilnehmerseite RT bildet den sogenannten Takt-Slave, d.h. das empfangsseitig zurückgewonnene Taktsignal wird als dessen Sendetakt verwendet.

Bei einer fehlerfreien Synchronisation des Transceivers RT auf der Teilnehmerseite stimmt die Taktfrequenz des Sendesignals exakt mit der Taktfrequenz des Empfangssignals überein. Daher muß die Taktregelschaltung des vermittlungsseitigen Transceivers nur die genaue Abtastphase in dem darin enthaltenen Empfänger einstellen. Die Abtastphase hängt dabei vor allem von der Signallaufzeit der Übertragungsleitung ab.

Bei dem in Fig. 1 dargestellten Datenübertragungssystem werden die Daten gleichzeitig in beide Richtungen über die Übertragungsleitung übertragen. Es handelt sich daher um ein sogenanntes Vollduplex-Datenübertragungssystem. Das analoge Empfangssignal eines Transceivers setzt sich dabei aus zwei Signalanteilen zusammen, nämlich aus dem von dem gegenüberliegenden Transceiver ausgesendeten Sendesignal und aus dem von der eigenen Sendeeinrichtung eingekoppelten Signalanteil bzw. dem Echosignalanteil. Der Echosignalanteil stellt dabei eine Signalstörung dar und wird in dem Empfänger des Transceivers mittels einer Echokompensationsschaltung kompensiert. Die Echokompensationsschaltung innerhalb des Transceivers berechnet dabei einen möglichst genauen Schätzwert für den Echosignalanteil und subtrahiert diesen von dem empfangenen Signal.

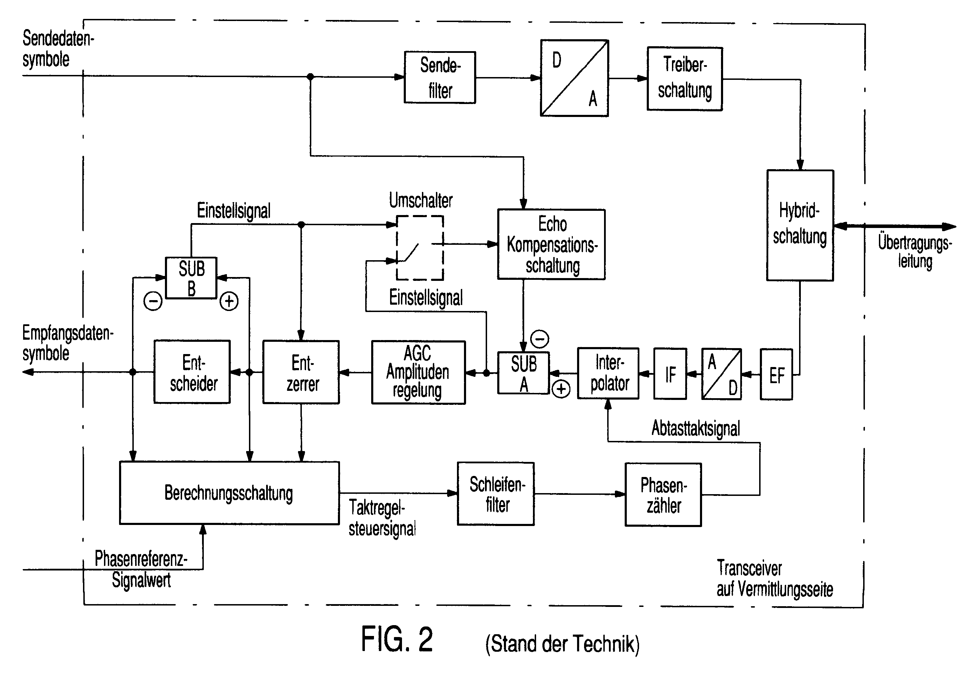

Fig. 2 zeigt einen herkömmlichen Transceiver nach dem Stand der Technik. Der Transceiver besteht aus einem Sendesignalpfad und einem Empfangssignalpfad. Die Sendedaten bzw. Sendedatensymbole werden im Sendesignalpfad zunächst einem Sendefilter zugeführt und anschließend mittels eines Digitalanalogwandlers in ein analoges Sendesignal umgewandelt. Das analoge Sendesignal wird mit einer Treiberschaltung verstärkt an eine Hybrid-Gabelschaltung abgegeben. Die Hybrid-Gabelschaltung ist an die Datenübertragungsleitung angeschlossen.

Am Empfangssignalpfad wird das empfangene analoge Signal zunächst durch ein analoges Empfangsfilter EF gefiltert und anschließend abgetastet. Das Abtasten erfolgt innerhalb einer Abtastschaltung, die entweder aus einem Analog-Digitalwandler besteht oder, wie in Fig. 2 dargestellt, aus einem Analogdigitalwandler, einem Interpolationsfilter IF und einem nachgeschalteten Interpolator. Der Analog-Digitalwandler tastet dabei das analoge Empfangssignal mit einem freilaufenden Arbeitstaktsignal ab. Das abgetastete Signal wird anschließend dem digitalen Interpolationsfilter IF zugeführt und durch den Interpolator interpoliert. Hierzu wird dem Interpolator ein geregeltes Abtasttaktsignal zugeführt.

Der Abtastschaltung ist eine Subtrahierschaltung A nachgeschaltet, die von dem abgetasteten digitalen Empfangssignal das von der Echokompensationsschaltung berechnete Schätzsignal durch Erzeugen eines echokompensierten digitalen Empfangssignals subtrahiert. Die Echokompensationsschaltung berechnet anhand der empfangenen Sendedatensymbole das zu erwartende Echosignal und subtrahiert dieses von dem empfangenen Signal. Die Echokompensationsschaltung ist in der Regel adaptiv einstellbar. Die Echokompensationsschaltung wird adaptiv in Abhängigkeit von der Übertragungsfunktion der Übertragungsleitung und der analogen Komponenten, wie beispielsweise der Übertrager, eingestellt.

Das von dem Subtrahierer A gebildete Differenzsignal wird einer Amplitudenregelungsschaltung AGC (Automatic Gain Control) zugeführt. Das in der Amplitude geregelte digitale Empfangssignal wird anschließend durch einen Entzerrer entzerrt. Der nachgeschaltete Entscheider bestimmt aus dem entzerrten Empfangssignal einen Schätzwert für das ursprünglich von dem anderen Transceiver ausgesendete Sendedatensymbol. Das gewonnene Sendedatensymbol wird zur weiteren Datenverarbeitung von dem Transceiver an die Datensenke abgegeben. Ein Subtrahierer führt eine Differenzbildung der Signalwerte vor und nach dem Entscheider durch. Dieses Fehler- bzw. Abweichungssignal dient als Einstellsignal für die Echokompensationsschaltung. Wie in der EP 0 144 067 Bl beschrieben, kann für das Einstellsignal der Echokompensationsschaltung entweder das von dem Subtrahierer A gebildete Differenzsignal oder das von dem Subtrahierer B gebildete Differenzsignal eingesetzt werden. Eine Umschaltung zwischen den beiden Einstellmöglichkeiten erfolgt mittels eines Umschalters.

Für die Regelung der Abtastphase des Empfangssignals wird mittels einer Steuerschaltung ein Taktregelkriterium bzw. ein Taktregelsteuersignal erzeugt. Das Taktregelsteuersignal gibt die Phasenabweichung zwischen der Signalphase des Abtasttaktsignals und einer gewünschten Soll-Signalphase eines idealen Abtasttaktsignals an. Das Taktregelkriterium bzw. das Taktregelsteuersignal ist ein Maß für den Phasenfehler zwischen dem idealen Abtasttakt, bei dem ein maximaler Signal-Rauschabstand besteht, und dem tatsächlichen Abtasttakt. Das Taktregelsteuersignal wird aus den Abtastwerten vor und nach dem Entscheider (entscheidungsrückgekoppelte Regelung) und ferner aus mindestens einem der Koeffizienten des linearen Entzerrers EQ durch die Steuerschaltung generiert. Das Taktregelkriterium bzw. das Taktregelsteuersignal setzt sich dabei aus zwei Anteilen zusammen, nämlich aus einem Signalanteil, der abhängig ist von den Abtastwerten vor und nach dem Entscheider, und aus einem zweiten Signalanteil, der sowohl abhängig von einem oder mehreren Koeffizienten des linearen Entzerrers als auch von einem geeignet vorgegebenen und an die Steuerschaltung angelegten Phasenreferenzsignalwert ist. Bei optimal eingestellter Abtastphase stimmt der Signalanteil, der von dem Koeffizienten abhängig ist, mit dem vorgegebenen Phasenreferenzsignalwert überein. Die Steuerschaltung generiert daher laufend eine Steuergröße, die ein Maß für die Abweichung der Abtastphase von der Soll-Phase darstellt.

Das generierte Taktregelsteuersignal wird an ein digitales Schleifenfilter abgegeben. Das Ausgangssignal des Schleifenfilters regelt unmittelbar die Abtastphase des Abtasttaktsignals für die Abtastschaltung. Dies wird in der Regel mit einem Phasenzähler realisisert. Der Zählerstand des Phasenzählers definiert dabei den Phasenunterschied zwischen der Sende- und der Empfangsphase. Im eingeschwungenen Zustand ist der Zählerstand des Phasenzählers weitgehend konstant entsprechend der konstanten Phasendifferenz zwischen der Phase des Sendesignals und der Phase des Empfangssignals. Diese konstante Phasendifferenz hängt von der Signallaufzeit der Übertragungsleitung ab.

Bei einem Taktphasenregelschritt innerhalb des Transceivers auf der Vermittlungsseite wird die Empfangsphase bzw. die Phase des digitalen Empfangssignals gegenüber der Phase des Sendesignals verändert. Da das eingekoppelte Echosignal mit der Phase des Sendesignals empfangen wird, wird bei jeder Taktphasenverstellung auch das mit dem Empfangstakt abgetastete Echosignal mitverändert. Der Transceiver auf der Vermittlungsseite weist daher eine starke Verkopplung der Taktphasenregelungsschaltung mit der Echokompensationsschaltung EC auf. Nach der Phasenänderung ist die Echokompensationsschaltung erneut einzustellen und der Entzerrer EQ muß so weit möglich neu synchronisiert werden.

Die Abtastphasenregelungsschaltung des in Fig. 2 dargestellten Transceivers nach dem Stand der Technik ist daher relativ träge, so daß der Transceiver nach dem Stand der Technik eine relativ lange Synchronisationszeit benötigt.

Es ist daher die Aufgabe der vorliegenden Erfindung, eine Taktphasenregelungsschaltung zur Taktphasenregelung eines Transceivers zu schaffen, die die notwendige Synchronisationszeit des Transceivers minimiert.

Diese Aufgabe wird erfindungsgemäß durch eine Taktphasenregelungsschaltung mit den im Patentanspruch 1 angegebenen Merkmalen gelöst.

Die Erfindung schafft eine Taktphasenregelungsschaltung zur Taktphasenregelung eines Transceivers mit
einer Abtastschaltung zum Abtasten eines analogen Empfangssignals mit einem Abtasttaktsignal,
einer Echosignalkompensationsschaltung zur Kompensation eines Echosignals, das durch ein von dem Transceiver gesendetes Sendesignal hervorgerufen wird,
wobei die Echosignalkompensationsschaltung in Abhängigkeit von einem Einstellsignal adaptiv einstellbar ist,
einer Steuerschaltung zur Erzeugung eines Steuersignals zur Taktphasenregelung, das die Phasenabweichung zwischen der Signalphase des Abtasttaktsignals und einer Soll-Signalphase eines idealen Abtasttaktsignals angibt,
einem Schleifenfilter zum Filtern des Steuersignals,
einem Phasenzähler zur Erzeugung des Abtasttaktsignals in Abhängigkeit von dem gefilterten Steuersignal,
wobei die erfindungsgemäße Taktphasenregelungsschaltung dadurch gekennzeichnet ist,
dass zwischen dem Schleifenfilter und dem Phasenzähler eine Amplitudenbegrenzungsschaltung vorgesehen ist, die die Amplitude des gefilterten Steuersignals auf einen Begrenzungswert begrenzt,
wobei der Begrenzungswert von dem Einstellsignal für die Echosignalkompensationsschaltung abhängt.

Bei einer bevorzugten Ausführungsform der erfindungsgemäßen Taktphasenregelungsschaltung enthält die Abtastschaltung einen Analog-Digitalwandler zur Umwandlung des analogen Empfangssignals in ein digitales Empfangssignal,
ein digitales Interpolationsfilter zum Filtern des digitalen Empfangssignals und
einen Interpolator zur Interpolation des gefilterten digitalen Empfangssignals.

Dabei wird der Analog-Digitalwandler vorzugsweise durch ein freilaufendes Arbeitstaktsignal getaktet.

Der Interpolator wird vorzugsweise durch das Abtasttaktsignal getaktet.

Ein digitales Ausgangssignal der Echosignalkompensationsschaltung wird vorzugsweise von dem gefilterten digitalen Empfangssignal mittels eines Subtrahierers zur Erzeugung eines echokompensierten digitalen Empfangssignals subtrahiert.

Bei einer bevorzugten Ausführungsform der erfindungsgemäßen Taktphasenregelungsschaltung ist eine Amplitudenregelungsschaltung zur Amplitudenregelung des echokompensierten digitalen Empfangssignals vorgesehen.

Bei einer weiteren bevorzugten Ausführungsform der erfindungsgemäßen Taktphasenregelungsschaltung ist ein Entzerrer zur Signalentzerrung des echokompensierten digitalen Empfangssignals vorgesehen.

Bei einer Ausführungsform der erfindungsgemäßen Taktphasenregelungsschaltung handelt es sich bei dem Entzerrer um einen linearen Entzerrer.

Bei einer alternativen Ausführungsform der erfindungsgemäßen Taktphasenregelungsschaltung ist der Entzerrer ein Decision-Feedback-Entzerrer.

Dem Entzerrer ist vorzugsweise ein Entscheider nachgeschaltet, der aus dem entzerrten digitalen Empfangssignal einen Schätzwert für das Empfangssignal erzeugt.

Bei einer bevorzugten Ausführungsform der erfindungsgemäßen Taktphasenregelungsschaltung ist ein Subtrahierer vorgesehen, der von dem entzerrten digitalen Empfangssignal den erzeugten Schätzwert zur Bildung eines Differenzsignals subtrahiert, welches für die Einstellung der Echosignalkompensationsschaltung vorgesehen ist.

Bei einer besonders bevorzugten Ausführungsform der erfindungsgemäßen Taktphasenregelungsschaltung berechnet die Steuerschaltung die zeitlich gemittelte Phasenabweichung zwischen der Phase des Abtastsignals und einem Phasenreferenzwert zur Erzeugung eines Phasenabweichungssignals.

Dabei ist vorzugsweise ferner ein steuerbarer Verstärker vorgesehen, der das Phasenabweichungssignal in Abhängigkeit von einem Verstärkungseinstellsignal zur Erzeugung des Einstellsignals für die Echokompensationsschaltung verstärkt.

Das Verstärkungseinstellsignal wird vorzugsweise von der Amplitudenregelungsschaltung generiert.

Der Begrenzungswert für die Amplitudenbegrenzungsschaltung wird vorzugsweise durch eine Berechnungsschaltung in Abhängigkeit von dem Einstellsignal für die Echokompensationsschaltung berechnet, wobei mit zunehmendem Einstellsignalwert der Begrenzungswert erhöht wird.

Bei einer besonders bevorzugten Ausführungsform der erfindungsgemäßen Taktphasenregelungsschaltung ist zusätzlich eine Schutzschaltung zur Vermeidung einer Fehlsynchronisation vorgesehen, die eine Betragsberechnungsschaltung zur Betragsbildung des Differenzsignals, ein nachgeschaltetes Mittlungsfilter und eine Überwachungssteuerschaltung enthält, wobei die Überwachungssteuerschaltung einen Phasenzähler zur Verstellung der Phase des Abtastsignals um einen vorgegebenen Phasensprungwert ansteuert, wenn
das durch das Mittlungsfilter gemittelte Differenzsignal während einer bestimmten Zeitdauer einen einstellbaren Schwellenwert nicht unterschreitet.

Weitere bevorzugte Ausführungsformen der erfindungsgemäßen Abtastphasenregelungsschaltung werden unter Bezugnahme auf die beigefügten Figuren zur Erläuterung erfindungswesentlicher Merkmale beschrieben.

Es zeigen:
Fig. 1 ein Datenübertragungssystem nach dem Stand der Technik;
Fig. 2 einen Transceiver nach dem Stand der Technik;
Fig. 3 ein Blockschaltbild einer bevorzugten Ausführungsform eines Transceivers mit der erfindungsgemäß Taktphasenregelungsschaltung;
Fig. 4 eine weitere bevorzugte Ausführungsform der erfindungsgemäßen Taktphasenregelungsschaltung.

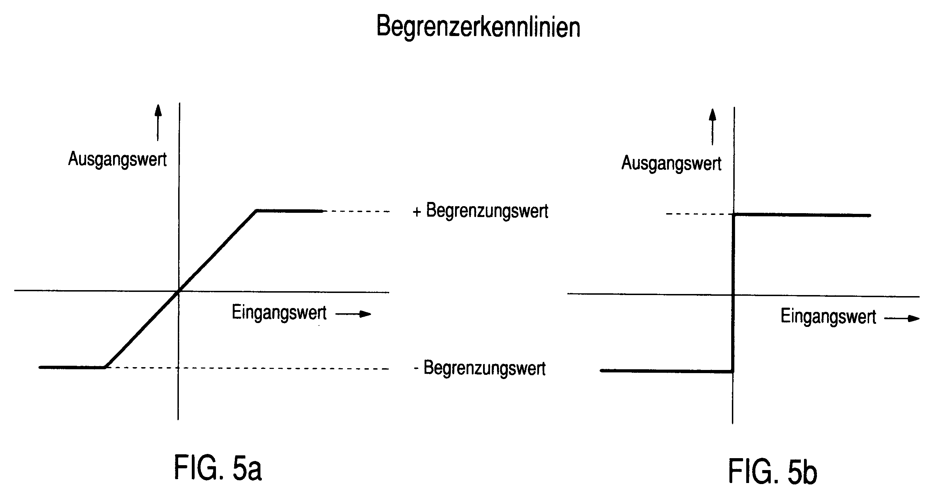

Fig. 5a, 5b zeigen Ausführungsformen der Amplitudenbegrenzungsschaltung der erfindungsgemäßen Taktphasenregelungsschaltung

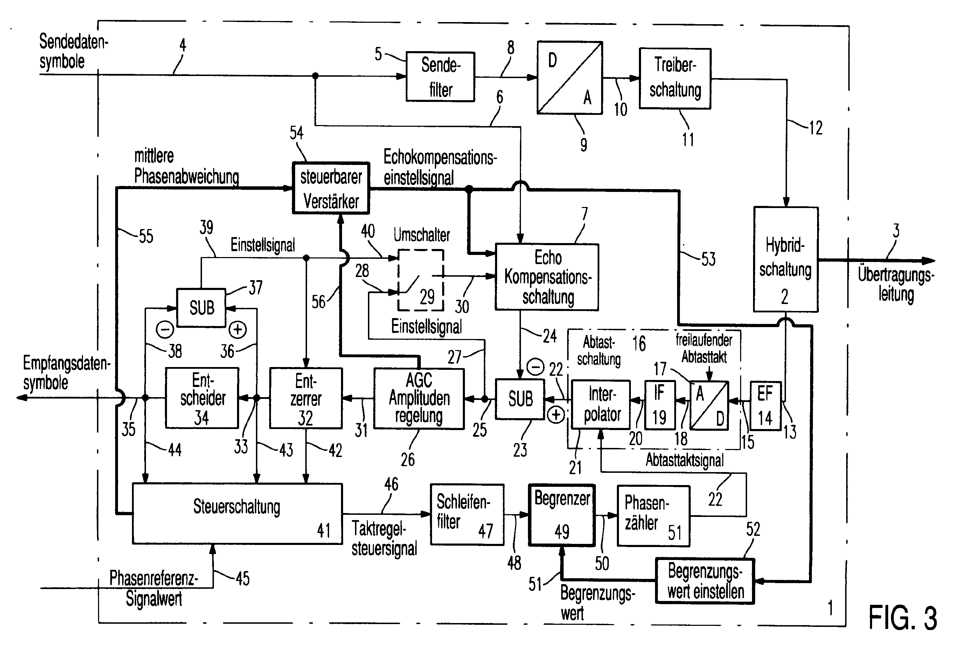

Fig. 3 zeigt einen Transceiver 1, der die erfindungsgemäße Taktphasenregelungsschaltung enthält. Der Transceiver 1 ist über eine Hybrid-Gabelschaltung 2 an eine Datenübertragungsleitung 3 angeschlossen. Über die Datenübertragungsleitung 3 empfängt der Transceiver 1 ein analoges Empfangssignal von einem anderen Transceiver. Darüber hinaus sendet der Transceiver 1 über die Datenübertragungsleitung 3 ein eigenes Sendesignal.

Der Transceiver 1 besteht aus einem Sendesignalpfad und einem Empfangssignalpfad. Der Transceiver 1 empfängt über eine Datenleitung 4 von einer Datenquelle Sendedatensymbole, die einem digitalen Sendefilter 5 zugeführt werden. Die eingehenden Sendedatensymbole werden ferner über eine Leitung 6 an eine in dem Transceiver 1 enthaltene Echokompensationsschaltung 7 angelegt. Dem Sendefilter 5 ist über eine Leitung 8 ein Digital-Analogwandler 9 nachgeschaltet. Der Digital-Analogwandler 9 wandelt die gefilterten Sendedaten in ein analoges Sendesignal um und gibt dieses über eine Leitung 10 an eine Treiberschaltung 11 innerhalb des Transceivers 1 ab. Die Treiberschaltung 11 verstärkt das anliegende analoge Sendesignal und legt das verstärkte Signal über eine Leitung 12 an die Hybrid-Gabelschaltung 2 an. Die Hybrid-Gabelschaltung 2 gibt das verstärkte Sendesignal über die Datenübertragungsleitung 3 an den entfernt gelegenen Transceiver ab. Das digitale Sendefilter 5, der Digitalanalogwandler 9 und die Treiberschaltung 11 bilden den Sendesignalpfad innerhalb des Transceivers 1.

Der Transceiver 1 empfängt über die Datenübertragungsleitung 3 ein analoges Empfangssignal von dem entfernt gelegenen Transceiver, wobei dieses Empfangssignal über eine Leitung 13 an ein analoges Empfangsfilter 14 angelegt wird. Darüber hinaus wird ein ungewünschtes Echosignal aufgrund des eigenen Sendesignals des Transceivers 1 eingekoppelt und an das analoge Empfangsfilter 14 angelegt. Das zusammengesetzte Empfangssignal wird über eine Leitung 15 an eine Abtastschaltung 16 innerhalb des Transceivers 1 abgegeben. Die Abtastschaltung 16 enthält zunächst einen Analog-Digitalwandler 17, der mit einem freilaufenden Arbeitstaktsignal arbeitet. Der Analog-Digitalwandler 17 wandelt das analoge Empfangssignal in ein digitales Empfangssignal um und gibt es über eine Leitung 18 an ein nachgeschaltetes Interpolationsfilter 19 ab. Dem Interpolationsfilter 19 ist über eine Leitung 20 ein Interpolatorschaltkreis 21 nachgeschaltet. Der Interpolator 21 wird über eine Leitung 22 mit einem geregelten Abtasttaktsignal versorgt. Durch die Abtastung mit Hilfe des Interpolators 21 kann eine weitgehend beliebige zeitliche Auflösung der Abtastphase erzielt werden.

Dem Interpolator 21 ist ausgangsseitig über eine Leitung 22 ein erster Subtrahierer 23 nachgeschaltet. Der Subtrahierer 23 subtrahiert von dem abgetasteten Empfangssignal das von der Echokompensationsschaltung 7 berechnete Echokompensationssignal. Das Kompensationssignal wird über eine Leitung 24 dem Subtrahierer 23 zugeführt. Durch das Echokompensationssignal wird das eingekoppelte Echosignal weitestgehend kompensiert. Hierzu berechnet die Echokompensationsschaltung 7 aus den anliegenden Sendedatensymbolen einen möglichst genauen Schätzwert für das zu erwartende Echosignal und gibt diesen Schätzwert als Echokompensationssignal über die Leitung 24 an den Subtrahierer 23 ab. Das echokompensierte Empfangssignal wird von dem Subtrahierer 23 über eine Leitung 25 an eine Amplitudenregelungsschaltung 26 abgegeben. Die Amplitudenregelungsschaltung 26 besteht aus einem Multiplizierer, der das Signal mit einem geregelten Verstärkungswert multipliziert. Das echokompensierte Differenzsignal, das von dem Subtrahierer 23 abgegeben wird, wird ferner über eine Leitung 27 an einen Eingang 28 eines steuerbaren Umschalters 29 angelegt. Das echokompensierte Signal kann von dem Umschalter 29 über eine Leitung 30 an die Echokompensationsschaltung 7 angelegt werden, wobei es als Fehler- bzw. Abweichungskriterium zur Einstellung der Echokompensationsschaltung 7 dient.

Das durch die Amplitudenregelungsschaltung 26 geregelte Empfangssignal wird über eine Leitung 31 an einen Entzerrer 32 angelegt. Bei dem Entzerrer 32 handelt es sich bei einer ersten Ausführungsform um einen linearen Entzerrer und bei einer zweiten Ausführungsform um eine Kombination aus einem linearen Entzerrer und einem Decision-Feedback-Entzerrer. Das entzerrte Empfangssignal wird über eine Leitung 33 an einen Entscheider 34 abgegeben. Der Entscheider 34 bildet aus dem entzerrten Empfangssignalwert einen Schätzwert für das ursprünglich empfangene Datensymbol und gibt dieses über eine Leitung 35 zur weiteren Datenverarbeitung an eine Datensenke ab. Die Verbindungsleitung zwischen dem Entzerrer 32 und dem Entscheider 34 ist über eine Leitung 36 an einen Subtrahierer 37 angeschlossen. Der andere Eingang des Subtrahierers 37 ist über eine Leitung 38 an die Ausgangsleitung 35 des Entscheiders 34 angeschlossen. Der Subtrahierer 37 bildet ein Differenzsignal zwischen dem Signalwert vor und nach dem Entscheider 34 und gibt dieses Differenzsignal als Fehler- bzw. Einstellsignal über eine Leitung 39 ab. Die Leitung 39 ist an einen zweiten Eingang 40 des Umschalters 29 angeschlossen und kann als Einstellsignal an die Echokompensationsschaltung 7 durchgeschaltet werden. Dabei wird das von dem Subtrahierer 37 abgegebene Differenzsignal als Fehlersignal für die Einstellung der Echokompensationsschaltung 7 und des Entzerrers 32 herangezogen.

Für die Regelung der Abtastphase des an der Leitung 22 anliegenden Abtasttaktsignals für die Abtastschaltung 16 wird durch eine Steuerschaltung 41 ein Taktregelsteuersignal erzeugt bzw. berechnet. Hierzu ist die Steuerschaltung 41 über eine Leitung 42 an den Entzerrer 32 angeschlossen und kann über die Leitung 42 die Koeffizienten des Entzerrers 32 auslesen. Darüber hinaus ist die Steuerschaltung 41 über eine Leitung 43 an die Verbindungsleitung 33 zwischen dem Entzerrer 32 und dem Entscheider 34 angeschlossen. Der Ausgang des Entscheiders 34 ist über eine Leitung 44 ebenfalls mit der Steuerschaltung 41 verbunden. Die Steuerschaltung 41 besitzt einen weiteren Eingang zum Empfang eines Phasenreferenzsignalwertes über eine Leitung 45. Die Steuerschaltung 41 berechnet aus den Abtastsignalwerten vor und nach dem Entscheider in einer entscheidungsrückgekoppelten Regelung und ferner aus mindestens einem der Koeffizienten des linearen Entzerrers 32 ein Taktregelsteuersignal. Eine mögliche Generierung des Taktregelsteuersignals wird in der Patentanmeldung mit dem amtlichen Aktenzeichen 100 25 566.3 beschrieben.

Das von der Steuerschaltung 41 generierte Taktregelsteuersignal wird über eine Steuerleitung 46 an ein nachgeschaltetes digitales Schleifenfilter 47 abgegeben. Das Schleifenfilter 47 filtert das Taktregelsteuersignal und gibt ein gefiltertes Steuersignal über eine Leitung 48 an eine Amplitudenbegrenzungsschaltung 49 ab. Die Amplitudenbegrenzungsschaltung 49 begrenzt die Signalamplitude des gesteuerten Signals und gibt das amplitudenbegrenzte Steuersignal über eine Leitung 50 an einen Phasenzähler 51 ab. Der Phasenzähler 51 ist ausgangsseitig über die Steuerleitung 22 an den Interpolator 21 angeschlossen und versorgt diesen mit dem geregelten Abtasttaktsignal.

Der Begrenzungswert für die Amplitudenbegrenzungsschaltung 49 wird über eine Leitung 51 von einer Begrenzungswerteinstellschaltung 52 zur Verfügung gestellt. Diese Begrenzungswerteinstellschaltung 52 erhält über eine Leitung 53 ein Echokompensationseinstellsignal für die Echokompensationsschaltung 7 von einem steuerbaren Verstärker 54. Der steuerbare Verstärker 54 ist eingangsseitig über eine Leitung 55 an die Steuerschaltung 41 angeschlossen. Die Steuerschaltung 41 berechnet die zeitlich gemittelte Phasenabweichung zwischen der Phase des Abtasttaktsignals und dem über die Leitung 45 angelegten Phasenreferenzsignalwert zur Erzeugung eines mittleren Phasenabweichungssignals, das über die Leitung 45 an den steuerbaren Verstärker 54 angelegt wird. Der steuerbare Verstärker 54 verstärkt das mittlere Phasenabweichungssignal in Abhängigkeit von einem Verstärkungseinstellsignal, das ihm über eine Leitung 56 zugeführt wird, zu einem Echokompensationseinstellsignal. Das Echokompensationseinstellsignal dient als Stellgröße für die Echokompensationsschaltung 7 und wird über die Leitung 53 zusätzlich der Begrenzungswerteinstellschaltung 52 zugeführt. Der Begrenzungswert wird durch die Begrenzungswerteinstellschaltung 52 nach Maßgabe der momentanen Stellgröße der Echokompensationsschaltung 7 eingestellt, wobei mit ansteigender Stellgröße bzw. zunehmendem Echokompensationseinstellsignal auch der Begrenzungswert für die Amplitudenbegrenzungsschaltung 49 zunimmt. Mit ansteigendem Echokompensationseinstellwert wird die Echokompensationsschaltung 7 schneller eingestellt, d.h. die Einstellzeit der Echokompensationsschaltung 7 reduziert sich. Bei der schnelleren Einstellung der Echokompensationsschaltung 7 wird ein höheres Eigenrauschen der Echokompensationsschaltung 7 in Kauf genommen. Durch den gleichzeitig erhöhten Begrenzungswert wird sichergestellt, daß die Abtastphase der Abtastphasenregelungsschaltung nur so schnell verändert wird, wie sich die Echokompensationsschaltung 7 der veränderten Abtastphase anpaßt.

Die erfindungsgemäße Taktphasenregelungsschaltung zeichnet sich durch die Verkopplung der Abtastphasenregelungsschaltung mit der Einstellung der Echokompensationsschaltung 7 aus. Mit ansteigendem Echokompensationseinstellwert wird der Begrenzungswert für die Amplitudenbegrenzungsschaltung 49 erhöht, so daß eine schnellere Einstellung der Abtastphase möglich ist. Gleichzeitig bewirkt das ansteigende Echokompensationseinstellsignal eine schnellere Einstellung der Echokompensationsschaltung 7, wobei ein höheres Eigenrauschen der Echokompensationsschaltung 7 in Kauf genommen wird. Die Regelung der Abtastphase wird somit derart vorgenommen, daß die Echokompensationsschaltung 7 stets folgen kann, d.h. die Einstellzeit entsprechend mitgeführt wird.

Um eine möglichst schnelle Einlaufzeit zu gewährleisten, wird das Echokompensationseinstellsignal abhängig von der Phasenlage durch Einstellung des steuerbaren Verstärkers 54 gesteuert. Bei großer Phasenablage bzw. Phasenabweichung wird zunächst die Stellgröße bzw. das Echokompensationseinstellsignal für die Echokompensationsschaltung 7 und somit auch der Begrenzungswert für die Amplitudenbegrenzungsschaltung 49 groß eingestellt. Dies bewirkt eine schnellere Taktphasenänderung. Bei sinkender Phasenablage bzw. abnehmender Phasenabweichung wird das Echokompensationseinstellsignal und der Begrenzungswert für die Amplitudenbegrenzungsschaltung 49 entsprechend verringert und nach Erreichen der optimalen Abtastphase entsprechend dem vorgegebenen Phasenreferenzsignalwert bleibt der Echokompensationseinstellsignalwert konstant.

Durch die erfindungsgemäße verkoppelte Taktphasenregelungsschaltung muß nach einer Phasenänderung die Echokompensationsschaltung 7 nicht neu eingestellt werden, da die Abtastphase nur so schnell verändert wird, wie sich die Echokompensationsschaltung 7 der veränderten Abtastphase anpaßt. Die Taktphasenregelung wird so lange durchgeführt, bis die Phasenabweichung zwischen der Signalphase des Abtasttaktsignals und einer Soll-Signalphase eines idealen Abtasttaktsignals minimal ist. Das ideale Abtasttaktsignal führt beispielsweise zu einem maximalen Signalrauschabstand SNR des Empfangssignals.

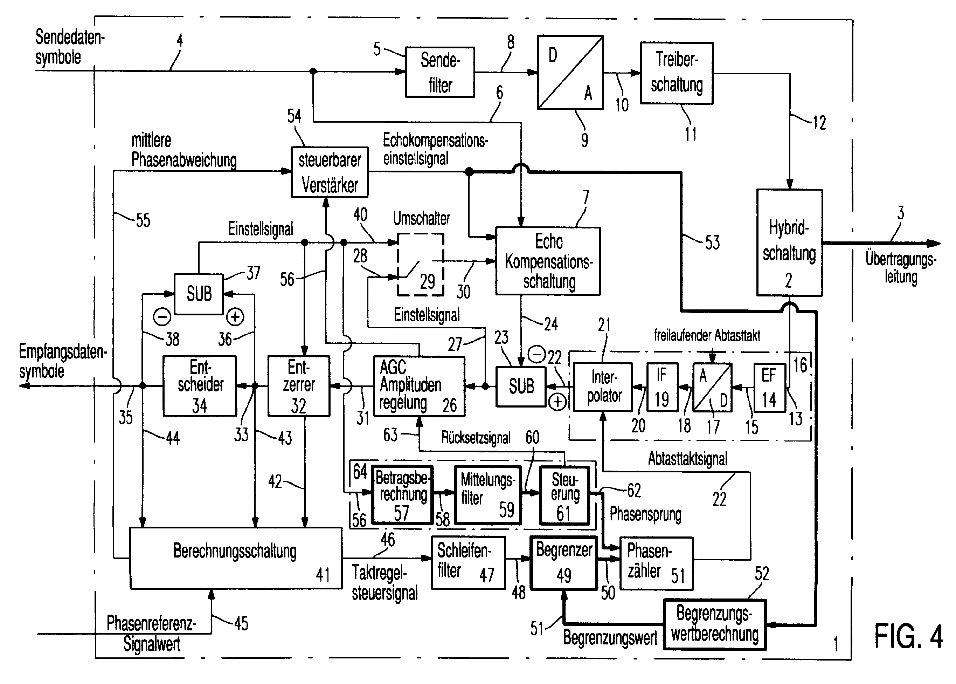

Fig. 4 zeigt eine besonders bevorzugte Ausführungsform der erfindungsgemäßen Taktphasenregelungsschaltung mit einer zusätzlichen Schutzschaltung zur Vermeidung von Fehlsynchronisationen. Bei einer ungünstigen Empfangsabtastphase, die abhängig von der Datenübertragungsleitung ist, kann es vorkommen, daß ein Entzerrereinlauf bzw. ein Einschwingen des Entzerrers 32 nicht erfolgen kann. Zur Vermeidung einer Fehlsynchronisation wird der aus den Signalwerten vor und nach dem Entscheider 34 ermittelte Fehler überwacht. Hierzu wird das von dem Subtrahierer 37 gebildete Differenzsignal über eine Leitung 56 einer Berechnungsschaltung 57 zugeführt. Die Berechnungsschaltung berechnet den Betrag oder das Quadrat des Fehlers bzw. Differenzwertes. Der Berechnungsschaltung 57 ist über eine Leitung 58 einem Mittelungsfilter 59 nachgeschaltet. Das gefilterte Signal wird über eine Leitung 60 einer Überwachungsschaltung 61 zugeführt. Die Überwachungsschaltung 61 prüft, ob der Fehlerbetragsmittelwert innerhalb einer vorbestimmten Zeitdauer nicht einen bestimmten Schwellenwert unterschreitet. Die Überwachungsschaltung 61 steuert den Phasenzähler 51 zur Verstellung des Phasenabtastsignals um einen vorgegebenen Phasensprungwert an, wenn das durch das Mittlungsfilter 59 gemittelte Differenzsignal während einer bestimmten Zeitdauer den einstellbaren Schwellenwert nicht unterschreitet. Hierzu gibt die Überwachungsschaltung 61 über eine Steuerleitung 62 ein entsprechendes Steuersignal an den Phasenzähler 51 ab. Unterschreitet der Fehlerbetragsmittelwert innerhalb der vorbestimmten Zeitdauer nicht den bestimmten Schwellenwert, dann ist eine ungünstige Anfangsphase eingestellt und ein vordefinierter Phasensprung, beispielsweise von einer halben Symboldauer, hat zu erfolgen. Zur schnellen Einstellung der Echokompensationsschaltung 7 wird über eine Rücksetzleitung 63 gleichzeitig die Amplitudenregelungsschaltung auf Null zurückgesetzt. Mit der neuen Abtastphase wird der Amplitudenregelungswert neu eingestellt. Falls nach dem erfolgten Phasensprung immer noch keine Konvergenz des Entzerrers 32 erreicht wird, kann der Vorgang in einem weiteren definierten Phasensprung, beispielsweise eine Viertel Datensymboldauer, wiederholt werden. Die Berechnungsschaltung 57, das Mittelungsfilter 59 und die Überwachungsschaltung 61 bilden zusammen eine Schutzschaltung 64 zur Vermeidung einer Fehlsynchronisation.

### Bezugszeichenliste

- 1: Transceiver
- 2: Hybrid-Gabelschaltung
- 3: Datenübertragungsleitung
- 4: Datenleitung
- 5: Sendefilter
- 6: Leitung
- 7: Echokompensationsschaltung
- 8: Leitung
- 9: Digitalanalogwandler
- 10: Leitung
- 11: Treiberschaltung
- 12: Leitung
- 13: Leitung
- 14: Empfangsfilter
- 15: Leitung
- 16: Abtastschaltung
- 17: Analogdigitalwandler
- 18: Leitung
- 19: Interpolationsfilter
- 20: Leitung
- 21: Interpolator
- 22: Leitung
- 23: Subtrahierer
- 24: Leitung
- 25: Leitung
- 26: Amplitudenregelung
- 27: Leitung
- 28: Eingang
- 29: Umschalter
- 30: Leitung
- 31: Leitung
- 32: Entzerrer
- 33: Leitung
- 34: Entscheider
- 35: Leitung
- 36: Leitung
- 37: Subtrahierer
- 38: Leitung
- 39: Leitung
- 40: Eingang
- 41: Steuerschaltung
- 42: Leitung
- 43: Leitung
- 44: Leitung
- 45: Leitung
- 46: Leitung
- 47: Schleifenfilter
- 48: Leitung
- 49: Amplitudenbegrenzungsschaltung
- 50: Leitung
- 51: Einstelleitung
- 52: Begrenzungswerteinstellschaltung
- 53: Leitung
- 54: steuerbarer Verstärker
- 55: Leitung
- 56: Leitung
- 57: Berechnungsschaltung
- 58: Leitung
- 59: Mittelungsfilter
- 60: Leitung
- 61: Überwachungsschaltung
- 62: Leitung
- 63: Rücksetzleitung
- 64: Schutzschaltung

## Patentansprüche

1. Taktphasenregelungsschaltung zur Taktphasenregelung eines Transceivers mit
(a) einer Abtastschaltung (16) zum Abtasten eines analogen Empfangssignals mit einem Abtasttaktsignal;
(b) einer Echosignalkompensationsschaltung (7) zur Kompensation eines Echosignals, das durch ein von dem Transceiver (1) gesendetes Sendesignal hervorgerufen wird,
wobei die Echosignalkompensationsschaltung (7) in Abhängigkeit von einem Einstellsignal adaptiv einstellbar ist;
(c) einer Steuerschaltung (41) zur Erzeugung eines Steuersignales zur Taktphasenregelung, das die Phasenabweichung zwischen der Signalphase des Abtasttaktsignals und einer Soll-Signalphase eines idealen Abtasttaktsignals angibt;
(d) einem Schleifenfilter (47) zum Filtern des Steuersignals;
(e) einem Phasenzähler (51) zur Erzeugung des Abtasttaktsignals in Abhängigkeit von dem gefilterten Steuersignal;
(f) einer Amplitudenbegrenzungsschaltung (49), die zwischen dem Schleifenfilter (47) und dem Phasenzähler (51) angeordnet ist, zum Begrenzen der Amplitude des gefilterten Steuersignals auf einen Begrenzungswert;
(g) wobei der Begrenzungswert von dem Einstellsignal für die Echosignalkompensationsschaltung (7) abhängt.

2. Taktphasenregelungsschaltung nach Anspruch 1,
**dadurch gekennzeichnet,**
**dass** die Abtastschaltung (16)
einen Analog-Digitalwandler (17) zur Umwandlung des analogen Empfangssignals in ein digitales Empfangssignal,
ein digitales Interpolationsfilter (19) zum Filtern des digitalen Empfangssignals und
einen Interpolator (21) zur Interpolation des gefilterten digitalen Empfangssignals aufweist.

3. Taktphasenregelungsschaltung nach Anspruch 1 oder 2,
**dadurch gekennzeichnet,**
**dass** der Analog-Digitalwandler (17) durch ein freilaufendes Arbeitstaktsignal getaktet wird.

4. Taktphasenregelungsschaltung nach einem der vorangehenden Ansprüche,
**dadurch gekennzeichnet,**
**dass** der Interpolator (21) durch das Abtasttaktsignal getaktet wird.

5. Taktphasenregelungsschaltung nach einem der vorangehenden Ansprüche,
**dadurch gekennzeichnet,**
**dass** ein digitales Ausgangssignal der Echokompensationsschaltung (7) von dem gefilterten digitalen Empfangssignal mittels eines Subtrahierers (23) zur Erzeugung eines echokompensierten digitalen Empfangssignals subtrahiert wird.

6. Taktphasenregelungsschaltung nach einem der vorangehenden Ansprüche,
**dadurch gekennzeichnet,**
**dass** eine Amplitudenregelungsschaltung (26) zur Amplitudenregelung des echokompensierten digitalen Empfangssignals vorgesehen ist.

7. Taktphasenregelungsschaltung nach einem der vorangehenden Ansprüche,
**dadurch gekennzeichnet,**
**dass** ein Entzerrer (32) zur Signalentzerrung des echokompensierten digitalen Empfangssignals vorgesehen ist.

8. Taktphasenregelungsschaltung nach Anspruch 7,
**dadurch gekennzeichnet,**
**dass** der Entzerrer (32) ein linearer Entzerrer ist.

9. Taktphasenregelungsschaltung nach Anspruch 7,
**dadurch gekennzeichnet,**
**dass** der Entzerrer (32) ein Decision-Feedback-Entzerrer ist.

10. Taktphasenregelungsschaltung nach einem der vorangehenden Ansprüche,
**dadurch gekennzeichnet,**
**dass** dem Entzerrer (32) ein Entscheider (34) nachgeschaltet ist, der aus dem entzerrten digitalen Empfangssignal einen Schätzwert für das Empfangssignal erzeugt.

11. Taktphasenregelungsschaltung nach einem der vorangehenden Ansprüche,
**dadurch gekennzeichnet,**
**dass** ein zweiter Subtrahierer (37) vorgesehen ist, der von dem entzerrten digitalen Empfangssignal den erzeugten Schätzwert zur Bildung eines Differenzsignals subtrahiert, welches für die Einstellung der Echosignalkompensationsschaltung (7) vorgesehen ist.

12. Taktphasenregelungsschaltung nach einem der vorangehenden Ansprüche,
**dadurch gekennzeichnet,**
**dass** die Steuerschaltung (41) die zeitlich gemittelte Phasenabweichung zwischen der Phase des Abtastsignals und einem Phasenreferenzwert zur Erzeugung eines Phasenabweichungssignals berechnet.

13. Taktphasenregelungsschaltung nach einem der vorangehenden Ansprüche,
**dadurch gekennzeichnet,**
**dass** ein steuerbarer Verstärker (54) vorgesehen ist, der das Phasenabweichungssignal in Abhängigkeit von einem Verstärkungseinstellsignal zur Erzeugung des Einstellsignals für die Echokompensationsschaltung (7) verstärkt.

14. Taktphasenregelungsschaltung nach Anspruch 13,
**dadurch gekennzeichnet,**
**dass** das Verstärkungseinstellsignal von der Amplitudenregelungsschaltung (26) abgegeben wird.

15. Taktphasenregelungsschaltung nach einem der vorangehenden Ansprüche,
**dadurch gekennzeichnet,**
**dass** der Begrenzungswert für die Amplitudenbegrenzungsschaltung (49) durch eine Berechnungsschaltung (52) in Abhängigkeit von dem Einstellsignal für die Echokompensationsschaltung (7) berechnet wird,
wobei mit zunehmenden Einstellsignalwert der Begrenzungswert erhöht wird.

16. Taktphasenregelungsschaltung nach einem der vorangehenden Ansprüche,
**dadurch gekennzeichnet,**
**dass** eine Schutzschaltung (64) zur Vermeidunge einer Fehlsynchronisation vorgesehen ist, die
eine Betragsberechnungsschaltung (57) zur Betragsberechnung des Differenzsignals,
ein nachgeschaltetes Mittlungsfilter (59) und
eine Überwachungsschaltung (61) enthält,
wobei die Überwachungsschaltung (61) den Phasenzähler (51) zur Verstellung der Phase des Abtastsignals um einen vorgegebenen Phasensprung ansteuert, wenn
das durch das Mittelungsfilter (59) gemittelte Differenzsignal während einer bestimmten Zeitdauer einen einstellbaren Schwellenwert nicht unterschreitet.
